(19) Europäisches Patentamt
European Patent Office
Office européen des brevets

(11) Veröffentlichungsnummer: **0 025 480**
**B1**

(12) # EUROPÄISCHE PATENTSCHRIFT

(45) Veröffentlichungstag der Patentschrift: **22.06.83**

(51) Int. Cl.³: **D 21 H 3/68**, C 09 K 3/28

(21) Anmeldenummer: **80103793.8**

(22) Anmeldetag: **04.07.80**

(54) **Flammschutzmittel für Papier, Karton und Pappe sowie dessen Verwendung.**

(30) Priorität: **12.09.79 DE 2936762**

(43) Veröffentlichungstag der Anmeldung: **25.03.81 Patentblatt 81/12**

(45) Bekanntmachung des Hinweises auf die Patenterteilung: **22.06.83 Patentblatt 83/25**

(84) Benannte Vertragsstaaten: **BE CH DE FR GB IT LI NL SE**

(56) Entgegenhaltungen:
**DE A 1 619 126**
**DE A 1 944 716**
**DE A 2 127 188**
**FR A 2 073 226**
**US A 2 935 471**
**US A 3 819 518**

(73) Patentinhaber: **Giulini Chemie GmbH**
**Giulinistrasse 2**
**D-6700 Ludwigshafen/Rhein (DE)**

(72) Erfinder: **Hechler, Erwin, Dr, Dipl.-Chem.**
**Julius-Leber-Strasse 36**
**D-6800 Mannheim (DE)**
Erfinder: **Shorr, Leonhard M., Dr., Dipl.-Chem.**
**P.O. Box 313**
**Haifa (IL)**

(74) Vertreter: **Benatzky, Erika, Dr.**
**Giulinistrasse 2**
**D-6700 Ludwigshafen/Rh. (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**EP 0 025 480 B1**

# Flammschutzmittel für Papier, Karton und Pappe sowie dessen Verwendung

Gegenstand der vorliegenden Erfindung ist ein Flammschutzmittel für Zellulose enthaltende Materialien wie Papier, Karton und Pappe, sowie die Verwendung einer wäßrigen Lösung dieses Mittels zur Tauchimprägnierung.

Papiere, Kartons und Pappe bestehen bekanntlich aus verdichteten Faservliesen, deren Hauptbestandteil zellulosischer Herkunft ist. Daher sind sie leicht entflammbar und brennen dann weiter bis zur Veraschung. Um nun die Entflammbarkeit herabzusetzen und damit das Ausbreiten der Flammen zu verhindern, sind bereits eine Vielzahl von Flammschutzmitteln und Flammschutzmittelsystemen vorgeschlagen worden, mit deren Hilfe es auch gelingt, die Brennbarkeit der zellulosehaltigen Materialien zu reduzieren, d. h. die Zellulose flammrestistent zu machen. Es kommt an den betroffenen Stellen lediglich zu einer Verkohlung und damit zum Erlöschen der Flamme.

In der DE-A-26 53 739 wird für Zellulose enthaltende Materialien ein wasserlösliches Flammschutzmittel vorgeschlagen, das durch einen Gehalt an Aluminiumsulfat und Dicyandiamid sowie ggf. einen geringen Anteil von Formaldehyd gekennzeichnet ist. Nach der bevorzugten Ausführungsform besteht das Imprägniermittel zu 90-60 Gew.% aus Aluminiumsulfat mit 18 Mol Kristallwasser und zu 10-40 Gew.% aus Dicyandiamid. Die flammhemmende Wirkung dieser Kombination kann zwar bereits als gut bezeichnet werden, jedoch hat sich der hierzu erforderliche mengenmäßige Auftrag von mindestens 15 Gew.%, bezogen auf das Gewicht des unbehandelten Papiers als zu hoch und für viele Papiere als nachteilig herausgestellt.

Es ist auch bereits vorgeschlagen worden, Papier durch Imprägnieren mit anorganischen Salzen, wie Mono- oder Diammoniumphosphat, Ammonchlorid, Borax u. a., möglichst flammsicher zu machen (Ullmanns Encyklopädie der technischen Chemie, 3. Aufl., 8. Bd., S. 145). Nachteilig sind jedoch auch bei diesen Verbindungen die hohen Mengen, die zur Erzielung der flammhemmenden Wirkung erforderlich sind. Außerdem wird durch den hohen Salzgehalt, der mit den bekannten Mitteln zur Flammfestausrüstung in die zellulosehaltigen Materialien eingebracht wird, die Festigkeit dieser Materialien ungünstig beeinflußt. Die Papierfestigkeiten sowie der Gebrauchswert der Papiere werden zum Teil erheblich reduziert.

Die Aufgabe der vorliegenden Erfindung besteht demnach darin, Stoffe oder eine Kombination von Stoffen zu finden, die bereits in geringen Mengen in Papier, Karton und Pappen ohne Verminderung des Gebrauchswertes der imprägnierten Materialien als Flammschutzmittel vollwirksam sind, insbesondere ohne die Festigkeit der Zellulosefasern in nennenswerter Weise herabzusetzen.

Die gestellte Aufgabe kann überraschend und unvorhersehbar mit einem Flammschutzmittel gelöst werden, das aus Ammoniak Ammoniumpolyphosphat und Ammoniumsulfamat besteht. Das erfindungsgemäß eingesetzte Ammoniumpolyphosphat ist wasserlöslich und kann nach einem der bekannten Herstellungsverfahren erzeugt werden. So hergestelltes Ammoniumpolyphosphat ist üblicherweise keine reine Verbindung, es enthält einen beachtlichen Teil an Orthophosphaten und Oligophosphaten eines Kondensationsgrades $< 10$. Gemische, in denen das Gewichtsverhältnis Ammoniumpolyphosphat zu Ammoniumsulfamat zwischen 1 : 1 und 9 : 1 liegt, stellen eine bevorzugte Ausführungsform der Erfindung dar. Wäßrige Lösungen der vorgenannten Gemische sind zur Tauchimprägnierung von Papieren und dgl. hervorragend geeignet. Zweckmäßigerweise werden die wäßrigen Salzlösungen vor der Imprägnierung auf einen pH-Wert zwischen 6 und 8 eingestellt.

Die Verwendung von Ammoniumpolyphosphat als Flammschutzmittel in Papier aus Cellulosefasern ist zwar aus der DE-B-17 71 693 bereits bekannt, jedoch werden hierbei ausschließlich wasserunlösliche Ammoniumpolyphosphate der allgemeinen Formel

$$H_{(n-m)+2}(NH_4)_mP_nO_{3n+1},$$

worin n eine ganze Zahl von etwa 20 bis 400 bedeutet und das Verhältnis m/n einen Durchschnittswert von etwa 0,7 bis 1,1 aufweist und m einen maximalen Wert von n + 2 hat, eingesetzt. Wasserunlösliche Ammoniumpolyphosphate sind zur Imprägnierung von Papieren und dgl. ungeeignet, sie müssen unmittelbar in die Zellulosepulpe eingetragen bzw. auf die Papieroberfläche gestrichen werden. Außerdem sind die angegebenen Mengen mit 1 bis 30 Gew.%, insbesondere 3 bis 15 Gew.%, bezogen auf die Zellulosefasern, unerwünscht hoch.

Die Verwendung von Ammoniumsulfamat als flammhemmendes Mittel wird in der US-A-2 771 379 vorgeschlagen, und zwar in Kombination mit Dicyandiamid, das die Zersetzung von Ammoniumsulfamat bei Einwirkung von Hitze und Licht verhindern soll.

Anhand der nachstehenden Untersuchungen soll nun der Gegenstand der Erfindung näher erläutert werden.

Die Vergleichsversuche wurden alle mit einem holzhaltigen nur schwach geleimten Papier (Flächengewicht : 70 g/m$^2$) durchgeführt. Die Tränkungen mit den angegebenen Salzlösungen erfolgten derart, daß die aufgenommene Menge an flammhemmendem Mittel in allen Fällen 5,0 %, bezogen auf das Eigengewicht des Papieres, betrug. Die an den imprägnierten Papieren vorgenommenen Prüfungen auf die Flammfestmachung wurden mit Hilfe eines Infrarot-Hellstrahlers durchgeführt. Gemäß dieser

Methode wird die eingespannte Papierprobe zehn Sekunden lang punktförmig mit einem gebündelten Strahl einer Quarzhalogenlampe bestrahlt. Die Papierprobe befindet sich dabei genau im Brennpunkt des Strahlenganges. Auf der Oberfläche der Probe wird kurzzeitig eine Temperatur von etwa 1 300 °C erzeugt. (Das Papier *28*, 296-305 (1974) Nr. 7). Durch Ausmessen der Brennflecklänge wird die Wirksamkeit der Imprägnierung ermittelt. (APP = Ammoniumpolyphosphat, SS = Ammoniumsulfamat).

Tabelle 1

| Papierimprägnierung | pH-Wert (5 %ige Lsg.) | Brennflecklänge (mm) | Bemerkung |
|---|---|---|---|
| nicht imprägniert | — | | brennt |
| 5 % APP | 3,8 | | brennt |
| 5 % APP + $NH_4OH$ | 6,0 | 62 | verkohlt |
| 4 % APP + 1 % SS + $NH_4OH$ | 6,0 | 50 | verkohlt |
| 3 % APP + 2 % SS + $NH_4OH$ | 6,0 | 45 | verkohlt |
| 2 % APP + 3 % SS + $NH_4OH$ | 6,0 | 45 | verkohlt |
| 1 % APP + 4 % SS + $NH_4OH$ | 6,0 | 45 | verkohlt |
| 5 % SS + $NH_4OH$ | 6,0 | 55 | verkohlt |
| 5 % SS | 5,5 | 104 | verkohlt |

Das eingesetzte APP zeigte folgende Zusammensetzung :

$P_2O_5$ ges. 63,9 %
$P_2O_5$ ortho 28,3 %
$P_2O_5$ poly 55,7 %

Der Stickstoffgehalt lag bei 11,9 %.

Aus der Tabelle geht hervor, daß eine Aufnahme von 5 % APP noch keine Flammfestmachung bewirkt und eine von 5 % SS nur einen geringen Flammschutz bringt. Weitaus bessere Werte werden erzielt, wenn o. a. Lösungen mittels $NH_4OH$ auf einen pH-Wert von 6 eingestellt werden. Überraschenderweise werden jedoch hervorragende Werte dann erzielt, wenn die Lösung von APP mit der SS-Lösung kombiniert eingesetzt und der pH-Wert bis nahe dem Neutralpunkt gebracht wird. Diese synergistische Wirkung war nicht vorhersehbar und konnte aus dem Stand der Technik nicht ohne erfinderisches Zutun hergeleitet werden. In diesem Zusammenhang muß noch hervorgehoben werden, daß das Mischungsverhältnis der beiden Salze die Wirkung in den angegebenen Grenzen nur unwesentlich beeinflußt, zumindest können mit dem angegebenen Meßverfahren Abstufungen größerer Dimension nicht festgestellt werden.

Zur Beurteilung der Festigkeiten unbehandelter und imprägnierter Papiere wurden weiterhin die Reißlängenwerte bestimmt.

Tabelle 2

| Papierimprägnierung | pH-Wert (5 %ige Lsg.) | Reißlänge (m) |
|---|---|---|
| nicht imprägniert | — | 4 290 |
| 5 % APP | 3,8 | 3 820 |
| 5 % APP + $NH_4OH$ | 6,0 | 4 090 |
| 4 % APP + 1 % SS + $NH_4OH$ | 6,0 | 4 328 |
| 3 % APP + 2 % SS + $NH_4OH$ | 6,0 | 4 328 |
| 2 % APP + 3 % SS + $NH_4OH$ | 6,0 | 4 396 |
| 1 % APP + 4 % SS + $NH_4OH$ | 6,0 | 4 290 |
| 5 % SS + $NH_4OH$ | 6,0 | 4 214 |
| 5 % SS | 5,5 | 3 716 |

Die Reißlängen der Papiere, die mit Lösungen von APP und SS allein imprägniert worden sind, liegen gemäß Tabelle deutlich unter den Werten, die bei Proben von mit erfindungsgemäßen Lösungen imprägnierten Papieren erhalten wurden.

Auch läßt sich feststellen, daß Reißlängenwerte über 4 000 m nur mit solchen Imprägnierlösungen erhalten werden, deren pH-Wert mit 6,0 nahe am Neutralpunkt liegt.

Ein ähnliches Bild ergibt sich beim Vergleich der Berstdruckwerte, wie in nachstehender Tabelle 3 gezeigt wird.

| Papierimprägnierung | pH-Wert (5 %ige Lsg.) | Berstdruck (bar) |
|---|---|---|
| nicht imprägniert | — | 0,8 |
| 5 % APP | 3,8 | 0,7 |
| 5 % APP + $NH_4OH$ | 6,0 | 0,81 |
| 4 % APP + 1 % SS + $NH_4OH$ | 6,0 | 0,81 |
| 3 % APP + 2 % SS + $NH_4OH$ | 6,0 | 0,83 |
| 2 % APP + 3 % SS + $NH_4OH$ | 6,0 | 0,78 |
| 1 % APP + 4 % SS + $NH_4OH$ | 6,0 | 0,75 |
| 5 % SS + $NH_4OH$ | 6,0 | 0,78 |
| 5 % SS | 5,5 | 0,75 |

Zwar ist der Trend in der Entwicklung des Berstdruckes hier nicht so eindeutig wie bei der Reißlänge. Unverkennbar ist jedoch, daß die besten Werte wiederum mit den Imprägnierlösungen erreicht werden, die aus dem erfindungsgemäßen Zweikomponenten bestehen und deren pH-Werte außerdem auf 6,0 eingestellt wurden.

Beispiel 1 : (Herstellung des Flammschutzmittels)

Das Flammfestmittel wird beispielsweise hergestellt, indem man 310 Gew.-Teile Wasser in einem Gefäß vorlegt und unter Rühren 200 Gew.-Teile Sulfaminsäure einträgt. Dann läßt man unter weiterem Rühren 240 Gew.-Teile Ammoniak portiosweise zufließen. Die dabei freiwerdende Neutralisationswärme wird bei größeren Ansätzen zweckmäßigerweise durch Kühlung entfernt. Zu der wäßrigen Lösung, die das Ammoniumsalz der Sulfaminsäure enthält, gibt man nunmehr 250 g wasserlösliches Ammoniumpolyphosphat zu. Unter weiterem Rühren löst sich dieses auf, und es liegt dann eine rund 50 %ige Lösung des Flammschutzmittels vor.

Beispiel 2 : (Tauchimprägnierung)

Für die Anwendung des Flammschutzmittels stellt man durch Verdünnen mit Wasser eine 7,5 %ige Tränklösung her, mit der eine Leimpresse beschickt wird. Durch diese wird ein Papier geführt, das aus der Lösung nach dem Abpressen zwischen den Walzen 70 %, bezogen auf das Papiergewicht, aufgenommen hat. An wirksamer Substanz aus dem Leimpressenansatz werden damit etwa 5 % an Flammschutzmittel übergeführt. In der Nachtrockenpartie wird alsdann die feuchte Papierbahn in bekannter Weise zu Ende getrocknet und wie üblich aufgerollt.

**Ansprüche**

1. Flammschutzmittel für Papier, Karton und Pappe, dadurch gekennzeichnet, daß es aus einer wäßrigen Lösung aus Ammoniak, wasserlöslichem Ammoniumpolyphosphat und Ammoniumsulfamat besteht.

2. Mittel nach Anspruch 1, dadurch gekennzeichnet, daß die beiden Salze im Gewichtsverhältnis 1 : 1 bis 9 : 1 vorhanden sind.

3. Verwendung des Mittels nach den Ansprüchen 1 und 2 zur Tauchimprägnierung von Papier, Karton und Pappe in Form einer wäßrigen Lösung, in welcher der pH-Wert mittels Ammoniak auf einen pH-Wert zwischen 6 und 8 eingestellt worden ist.

**Claims**

1. Fire retarding agent for paper, cardboard and pasteboard, characterised in that it consists of an aqueous solution of ammonia, water-soluble ammonium polyphosphate and ammonium sulphamate.

2. Agent as claimed in claim 1, characterised in that the two salts are present in a weight ratio of from 1 : 1 to 9 : 1.

3. Use of the agent as claimed in claims 1 and 2 for the impregnation by immersion of paper, cardboard and pasteboard, in the form of an aqueous solution in which the pH has been adjusted to a value between 6 and 8 using ammonia.

**Revendications**

1. Agent ignifugeant pour papier, carton et cartonnage, caractérisé en ce qu'il consiste en une

solution aqueuse d'ammoniac, de polyphosphate d'ammonium soluble dans l'eau et de sulfamate d'ammonium.

2. Agent selon la revendication 1, caractérisé en ce que les deux sels sont présents dans le rapport pondéral de 1 : 1 à 9 : 1.

3. Utilisation de l'agent selon les revendications 1 et 2 pour l'imprégnation par trempage du papier, du carton et du cartonnage sous forme d'une solution aqueuse dans laquelle la valeur du pH a été réglée au moyen d'ammoniac à une valeur de pH entre 6 et 8.